(19) Europäisches Patentamt
European Patent Office
Office européen des brevets

(11) **EP 3 044 865 B1**

(12) **FASCICULE DE BREVET EUROPEEN**

(45) Date de publication et mention
de la délivrance du brevet:
**03.11.2021   Bulletin 2021/44**

(21) Numéro de dépôt: **14761881.3**

(22) Date de dépôt: **11.09.2014**

(51) Int Cl.:
*H02M 7/493* *(2007.01)*        *H02P 27/08* *(2006.01)*
*H02M 7/48* *(2007.01)*

(86) Numéro de dépôt international:
**PCT/EP2014/069389**

(87) Numéro de publication internationale:
**WO 2015/036479 (19.03.2015 Gazette 2015/11)**

(54) **SYSTEME DE COMMANDE D'UNE CHARGE ELECTRIQUE**

STEUERUNGSSYSTEM FÜR EINE ELEKTRISCHE LADUNG

COMMAND SYSTEM FOR AN ELECTRIC CHARGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **11.09.2013   FR 1358733**

(43) Date de publication de la demande:
**20.07.2016   Bulletin 2016/29**

(73) Titulaire: **Schneider Toshiba Inverter Europe SAS
27120 Pacy sur Eure (FR)**

(72) Inventeurs:
  • **MALRAIT, François**
    **F-27120 Jouy sur Eure (FR)**
  • **HERNANDEZ, Michael**
    **F-75015 Paris (FR)**

(74) Mandataire: **Mouney, Jérôme et al
Schneider Electric Industries SAS
Service Propriété Industrielle
35 rue Joseph Monier - CS30323
92506 Rueil Malmaison Cedex (FR)**

(56) Documents cités:
**DE-A1- 4 105 868      JP-A- 2008 086 127
US-A- 5 446 645**

• **PANOV Y ET AL: "ANALYSIS AND DESIGN OF N
PARALLELED DC-DC CONVERTERS WITH
MASTER-SLAVE CURRENT-SHARING
CONTROL", APEC '97. TWELTH ANNUAL
APPLIED POWER ELECTRONICS CONFERENCE
AND EXPOSITION. ATLANTA, FEB. 23 - 27, 1997;
[APEC. ANNUAL APPLIED POWER
ELECTRONICS CONFERENCE AND
EXPOSITION], NEW YORK, IEEE, US, vol. CONF.
12, 23 février 1997 (1997-02-23), pages 436-442,
XP000736214, ISBN: 978-0-7803-3705-3**
• **None**

**Description**

**Domaine technique de l'invention**

La présente invention se rapporte à un système de commande d'une charge électrique.

**Etat de la technique**

En vue d'augmenter la puissance fournie à une même charge électrique, il est connu de mettre en parallèle plusieurs convertisseurs de puissance. Le problème principal lié à cette configuration réside dans le fait qu'un courant circule d'un convertisseur de puissance à l'autre. Il en résulte alors que la somme des courants sur les trois phases de sortie d'un convertisseur de puissance n'est pas nulle alors qu'elle devrait l'être. Pour limiter ce problème, une solution connue consiste à synchroniser entre elles les commandes en MLI (Modulation en largeur d'impulsion) des étages onduleurs. De telles solutions sont par exemple décrites dans les brevets US7.327,111, US8,188,694 ou US6,917,271. Elles utilisent une unité de commande centralisée qui génère les signaux MLI à destination des étages onduleurs de tous les convertisseurs de puissance connectés en parallèle. En revanche, avec une unité de commande distincte pour commander chaque étage onduleur, la synchronisation des signaux MLI n'est plus suffisante car elle ne garantit pas que chaque unité de commande génère la même tension de sortie. D'un convertisseur de puissance à l'autre, des fluctuations apparaissent, liées par exemple aux variations des paramètres, des gains ou des mesures de courants.

On peut trouver des autres exemples de l'art antérieur dans JP 2008 086127, DE 41 05 868 A1, US 5446645 et "Analysis and Design of N Paralleled DC-DC Converters With Master-Slave Current-Sharing Control", Y. Panov et al., XP000736214.

Le but de l'invention est donc de proposer un système de commande employant plusieurs convertisseurs de puissance connectés en parallèle par le bus continu d'un coté, par les tensions moteur de l'autre à travers un circuit d'inductances, pour commander une charge électrique, ledit système de commande étant agencé pour s'assurer d'un équilibrage des courants de sortie entre les convertisseurs de puissance connectés en parallèle.

**Exposé de l'invention**

Ce but est atteint par un système de commande d'une charge électrique, ledit système comprenant :

- Un premier convertisseur de puissance et un deuxième convertisseur de puissance connectés en parallèle, chaque convertisseur de puissance comprenant un étage onduleur présentant une sortie connectée à la charge électrique,
- Une première unité de commande affectée à la commande de l'étage onduleur du premier convertisseur de puissance et une deuxième unité de commande affectée à la commande de l'étage onduleur du deuxième convertisseur de puissance,
- La première unité de commande comportant un module de commande principal agencé pour déterminer une première tension de sortie à appliquer à la charge électrique, ladite première tension de sortie étant déterminée en fonction du courant de sortie du premier convertisseur de puissance,
- La deuxième unité de commande comportant un module de commande principal agencé pour déterminer une deuxième tension de sortie à appliquer à la charge électrique, ladite deuxième tension de sortie étant déterminée à partir du courant de sortie du deuxième convertisseur de puissance, et un module de commande secondaire agencé pour déterminer une tension de correction à appliquer à ladite deuxième tension de sortie, ladite tension de correction étant déterminée à partir de la différence entre le courant de sortie du deuxième convertisseur de puissance et le courant de sortie du premier convertisseur de puissance.

Selon une autre particularité, le premier convertisseur de puissance et le deuxième convertisseur de puissance comportent chacun un bus continu d'alimentation appliquant une tension continue à leur étage onduleur et le premier convertisseur de puissance et le deuxième convertisseur de puissance sont connectés entre eux par leur bus continu d'alimentation.

Selon une autre particularité, le bus continu d'alimentation du premier convertisseur de puissance et le bus continu d'alimentation du deuxième convertisseur de puissance comportent chacun une ligne d'alimentation à potentiel électrique positif et une ligne d'alimentation à potentiel électrique négatif.

Selon une autre particularité, la sortie du premier convertisseur de puissance est connectée à la sortie du deuxième convertisseur de puissance.

**Brève description des figures**

D'autres caractéristiques et avantages vont apparaître dans la description détaillée qui suit faite en regard des dessins annexés dans lesquels :

- la figure 1 représente le système de commande de l'invention,

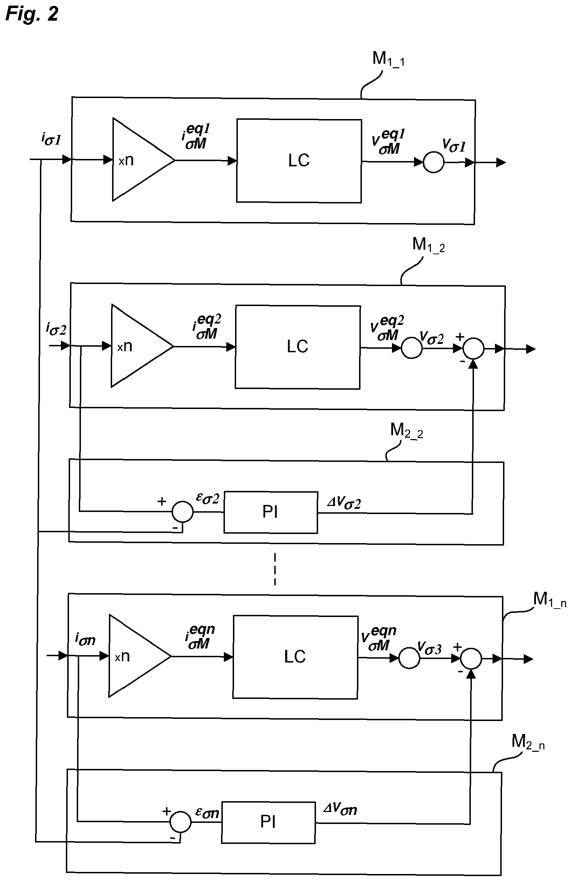

- la figure 2 illustre de manière schématique le principe de commande mis en œuvre dans le système de commande de l'invention.

**Description détaillée d'au moins un mode de réalisation**

Le système de commande de l'invention est destiné à la commande d'une charge électrique, telle que par exemple un moteur électrique M. Le système de commande présente la particularité de comporter plusieurs convertisseurs de puissance connectés en parallèle au même moteur électrique.

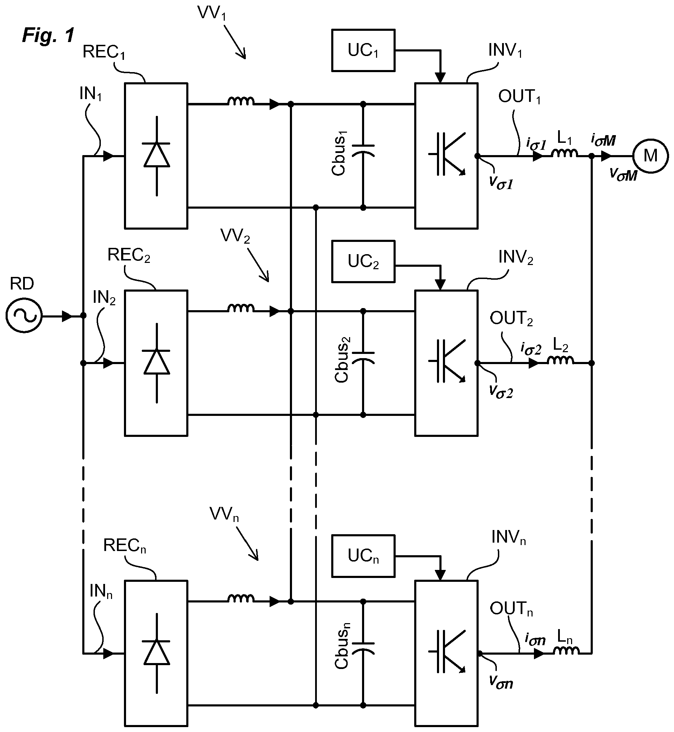

Chaque convertisseur de puissance est par exemple du type variateur de vitesse. De manière connue, comme représenté sur la figure 1, un variateur de vitesse $VV_k$ (k allant de 1 à n) comporte :

- une entrée $IN_k$ comportant par exemple trois phases d'entrée,

- un étage redresseur $REC_k$ connecté par l'entrée à un réseau de distribution électrique R,

- un bus continu d'alimentation connecté à l'étage redresseur et comportant une ligne d'alimentation à potentiel positif et une ligne d'alimentation à potentiel négatif, l'étage redresseur étant agencé pour redresser la tension fournie par le réseau de distribution électrique en vue d'appliquer une tension continue sur le bus continu d'alimentation,

- un ou plusieurs condensateurs de bus $Cbus_k$ destinés à maintenir la tension du bus à une valeur constante,

- un étage onduleur $INV_k$ comportant plusieurs bras de commutation chargés de découper la tension fournie par le bus continu d'alimentation en une tension variable à destination du moteur électrique M,

- une sortie $OUT_k$ comportant par exemple trois phases de sortie, la sortie étant connectée aux bras de commutation de l'étage onduleur $INV_k$ de manière à recevoir une tension de sortie $v_{\sigma k}$. Une inductance de sortie $L_k$ est connectée sur la sortie.

Comme représenté sur la figure 1, plusieurs variateurs de vitesse sont connectés en parallèle en reliant les entrées entre elles et les sorties entre elles. Par ailleurs, les variateurs de vitesse sont également connectés entre eux par leur bus continu d'alimentation. Les lignes d'alimentation positives des variateurs de vitesse sont ainsi connectées entre elles et les lignes d'alimentation négatives des variateurs de vitesse sont connectées entre elles.

Dans la suite de la description, l'indice σ est employé pour représenter chacune des trois phases de sortie.

Le système de commande de l'invention comporte également plusieurs unités de commande $UC_k$ (k compris entre 1 et n), une unité de commande distincte étant affectée à la commande de l'étage onduleur $INV_k$ de chaque variateur de vitesse $VV_k$.

De manière connue, une unité de commande $UC_k$ comporte un module de commande principal $M_{1\_k}$ (k compris entre 1 et n) recevant en entrée une estimation ou une mesure du courant de sortie du variateur de vitesse commandé et détermine, selon une ou plusieurs consignes et en fonction des paramètres du moteur électrique, une tension de sortie à appliquer au moteur électrique. Plus précisément, le courant de sortie $i_{\sigma k}$ obtenu est multiplié par le nombre n de variateurs de vitesse du système de manière à déterminer le courant moteur $i_{\sigma M}^{eqk}$. Ce courant moteur $i_{\sigma M}^{eqk}$ est ensuite employé pour déterminer la tension moteur $v_{\sigma M}^{eqk}$ à appliquer en mettant en œuvre une loi de commande LC connue (ne faisant pas l'objet de l'invention). Cette tension moteur $v_{\sigma M}^{eqk}$ correspond ensuite à la tension de sortie $v_{\sigma k}$.

Dans le système de commande de l'invention, chaque unité de commande $UC_k$ détermine de manière autonome une tension de sortie $v_{\sigma k}$ à appliquer au moteur électrique M et chaque variateur de vitesse $VV_k$ est commandé de manière autonome pour appliquer cette tension de sortie $v_{\sigma k}$ au moteur électrique M.

Autrement dit, pour chaque variateur de vitesse du système, nous avons les relations suivantes, formant un système S1 :

$$L_1 \frac{d}{dt} i_{\sigma 1} = v_{\sigma 1} - v_{\sigma M}$$

$$L_n \frac{d}{dt} i_{\sigma n} = v_{\sigma n} - v_{\sigma M}$$

Dans lequel :

-   $L_1 ... L_n$ représente l'inductance de sortie de chaque variateur de vitesse,

-   $i_{\sigma 1} ... i_{\sigma n}$ représente le courant de sortie de chaque variateur de vitesse,

-   $v_{\sigma 1} ... v_{\sigma n}$ représente la tension de sortie de chaque variateur de vitesse,

-   $v_{\sigma M}$ représente la tension globale sur le moteur électrique.

Les inductances sont préférentiellement choisies identiques.

Les relations ci-dessus ne permettent pas de garantir un équilibrage des courants lorsque les composants physiques employés diffèrent d'un variateur de vitesse à l'autre.

Par conséquent, l'objectif de l'invention est de permettre un contrôle des courants des variateurs tout en tenant compte du courant à appliquer au moteur électrique. Cet objectif s'exprime de la manière suivante :

$$i_{\sigma 1} + i_{\sigma 2} + ... + i_{\sigma n} = i_{\sigma M}$$

$$i_{\sigma 1} = i_{\sigma 2} = ... = i_{\sigma n}$$

Pour garantir un équilibrage des courants entre les variateurs de vitesse, l'invention consiste à faire en sorte qu'au moins l'un des courants de sortie d'un variateur de vitesse soit connu des unités de commande des autres variateurs de vitesse du système. Pour cela, la manière la plus simple consiste à choisir un variateur de vitesse dit "maître" dont le courant de sortie est envoyé aux unités de commande des autres variateurs de vitesse du système de commande.

Le variateur de vitesse "maître" est par exemple le variateur de rang 1 associé à l'unité de commande de rang 1. Les variateurs de vitesse dits "esclaves" sont alors ceux des rangs 2 à n, associés chacun à une unité de commande respective de rang 2 à n.

Dans le système ainsi formé, l'unité de commande du variateur de vitesse "maître" de rang 1 comporte un module de commande principal $M_{1\_1}$ tel que décrit ci-dessus, permettant de déterminer la tension de sortie $v_{\sigma 1}$ à appliquer en sortie du variateur de vitesse "maître" en fonction du courant de sortie $i_{\sigma 1}$ du variateur de vitesse "maître" $VV_1$.

Selon l'invention, les unités de commande des rangs 2 à n comportent chacune un module de commande principal $M_{1\_k}$ (k compris entre 2 et n) tel que décrit ci-dessus, qui est agencé pour déterminer la tension de sortie du variateur de vitesse commandé et un module de commande secondaire $M_{2\_k}$ (k compris entre 2 et n). Ce module de commande secondaire est agencé pour déterminer une tension de correction $\Delta v_{\sigma k}$ à appliquer à la tension de sortie $v_{\sigma k}$ déterminée par le module de commande principal $M_{1\_k}$. Dans chaque unité de commande de rang 2 à n, le module de commande secondaire $M_{2\_k}$ reçoit, en entrée, le courant de sortie $i_{\sigma k}$ du variateur de vitesse commandé ainsi que le courant de sortie $i_{\sigma 1}$ du variateur de vitesse $VV_1$ de rang 1. Le module de commande secondaire $M_{2\_k}$ est agencé pour déterminer la différence entre le courant de sortie $i_{\sigma k}$ du variateur de vitesse $VV_k$ commandé et le courant de sortie $i_{\sigma 1}$ du variateur de vitesse de rang 1 et pour injecter ladite différence dans un correcteur à action proportionnelle ou un correcteur à action proportionnelle-intégrale PI. A partir de la différence injectée en entrée, le correcteur détermine une tension de correction à appliquer à la tension de sortie déterminée par le module de commande principal. Pour chaque variateur de vitesse, cette tension de correction reflète donc la différence à corriger entre le courant de sortie dudit variateur de vitesse et le courant de sortie de référence du variateur de vitesse choisi comme "maître".

Le module de commande secondaire met ainsi en œuvre un algorithme de contrôle s'exprimant par les relations suivantes, pour un variateur de vitesse "esclave" k (k compris entre 2 et n) :

$$\Delta V_{\sigma k} = -\text{KP} \cdot (i_{\sigma k} - i_{\sigma 1}) + \Delta V_{Intk}$$

$$\frac{d}{dt}\Delta V_{Intk} = -\text{KI} \cdot (i_{\sigma k} - i_{\sigma 1})$$

Avec :

- $\Delta v_{\sigma k}$ qui représente la tension de correction déterminée pour le variateur de vitesse k (k allant de 2 à n),
- KP, KI les gains du régulateur employé,
- $\Delta v_{Intk}$ le terme intégral du régulateur employé.

En réutilisant ces expressions dans le système S1 exprimé ci-dessus, on obtient alors :

$$\begin{cases} L_2 \frac{d}{dt}(i_{\sigma 2} - i_{\sigma 1}) = -\text{KP} \cdot (i_{\sigma 2} - i_{\sigma 1}) + \Delta V_{Int2} + \left[ V_{\sigma M}{}^{2eq.} - V_{\sigma M}{}^{1eq.} - (L_2 - L_1)\frac{d}{dt}i_{\sigma 1} \right] \\[2mm] \frac{d}{dt}\Delta V_{Int2} = -\text{KI} \cdot (i_{\sigma 2} - i_{\sigma 1}) \\[2mm] L_3 \frac{d}{dt}(i_{\sigma 3} - i_{\sigma 1}) = -\text{KP} \cdot (i_{\sigma 3} - i_{\sigma 1}) + \Delta V_{Int3} + \left[ V_{\sigma M}{}^{3eq.} - V_{\sigma M}{}^{1eq.} - (L_3 - L_1)\frac{d}{dt}i_{\sigma 1} \right] \\[2mm] \frac{d}{dt}\Delta V_{Int3} = -\text{KI} \cdot (i_{\sigma 3} - i_{\sigma 1}) \\[2mm] L_{n-1} \frac{d}{dt}(i_{\sigma n-1} - i_{\sigma 1}) = -\text{KP} \cdot (i_{\sigma n-1} - i_{\sigma 1}) + \Delta V_{Intn-1} + \left[ V_{\sigma M}{}^{n-1eq.} - V_{\sigma M}{}^{1eq.} - (L_{n-1} - L_1)\frac{d}{dt}i_{\sigma 1} \right] \\[2mm] \frac{d}{dt}\Delta V_{Intn-1} = -\text{KI} \cdot (i_{\sigma n-1} - i_{\sigma 1}) \\[2mm] L_n \frac{d}{dt}(i_{\sigma n} - i_{\sigma 1}) = -\text{KP} \cdot (i_{\sigma n} - i_{\sigma 1}) + \Delta V_{Intn} + \left[ V_{\sigma M}{}^{neq.} - V_{\sigma M}{}^{1eq.} - (L_n - L_1)\frac{d}{dt}i_{\sigma 1} \right] \\[2mm] \frac{d}{dt}\Delta V_{Intn} = -\text{KI} \cdot (i_{\sigma n} - i_{\sigma 1}) \end{cases}$$

Qui montre un contrôle effectif de l'écart de courant, c'est-à-dire :

$$\begin{cases} i_{\sigma 2} = i_{\sigma 1} \\ i_{\sigma 3} = i_{\sigma 1} \\ i_{\sigma n-1} = i_{\sigma 1} \\ i_{\sigma n} = i_{\sigma 1} \end{cases}$$

Dans un système de commande à deux variateurs de vitesse, le principe de l'invention consiste donc à faire en sorte que le courant de sortie de l'un des deux variateurs de vitesse soit fourni à l'autre variateur de vitesse. Si le système comporte plus de deux variateurs de vitesse connectés en parallèle, le même principe peut être employé de sorte que l'un des variateurs de vitesse fournisse son courant de sortie aux autres variateurs de vitesse du système.

La démonstration suivante illustre une généralisation de la solution. Cette solution générale consiste à stabiliser le système (1) suivant :

$$L_1 \frac{d}{dt}i_{\sigma 1} = V_{\sigma 1} - V_{\sigma M}$$

$$L_n \frac{d}{dt}i_{\sigma n} = V_{\sigma n} - V_{\sigma M} \qquad (1)$$

dans lequel les courants suivent la relation :

$$i_{\sigma1} + i_{\sigma2} + ... + i_{\sigma n} = i_{\sigma M}$$

L'objectif est alors d'équilibrer les courants entre les différents variateurs :

$$i_{\sigma1} = i_{\sigma2} = ... = i_{\sigma n}$$

Pour simplifier l'écriture, nous considérons ici que les inductances Li sont toutes identiques et égales à L. La différence entre les inductances peut être gérée comme une perturbation du système ainsi simplifié. En écriture matricielle, les relations (1) deviennent :

$$L\frac{d}{dt}\begin{pmatrix} i_{\sigma1} \\ i_{\sigma2} \\ \vdots \\ i_{\sigma n} \end{pmatrix} = \begin{pmatrix} V_{\sigma1} \\ V_{\sigma2} \\ \vdots \\ V_{\sigma n} \end{pmatrix} - \begin{pmatrix} 1 \\ 1 \\ \vdots \\ 1 \end{pmatrix} \cdot V_{\sigma M} \qquad (2)$$

Les tensions fournies par chaque variateur peuvent se décomposer comme la somme de deux grandeurs :

$$V_{\sigma i} = V_{\sigma Mi} + V_{E\sigma1}$$

Une première grandeur $V_{\sigma Mi}$ sert à contrôler le moteur.
Une seconde grandeur $V_{E\sigma1}$ sert à contrôler l'équilibre des courants des variateurs.
Pour simplifier l'écriture, nous considérons ici que les composantes des tensions $V_{\sigma Mi}$ servant à contrôler le moteur sont toutes identiques et égales à $V_{\sigma M}^{REF}$. La différence entre ces composantes de tension peut être gérée comme une perturbation du système ainsi simplifié.
Définissons P la matrice inversible de changement de coordonnées telle que :

$$P \times \begin{pmatrix} 1 \\ 1 \\ \vdots \\ 1 \end{pmatrix} = \begin{pmatrix} n \\ 0 \\ \vdots \\ 0 \end{pmatrix}.$$

Définissons alors les courants $i_{\Sigma i}$ pour i de 1 à n-1 tels que :

$$P \times \begin{pmatrix} i_{\sigma1} \\ i_{\sigma2} \\ \vdots \\ i_{\sigma n} \end{pmatrix} = \begin{pmatrix} i_{\sigma M} \\ i_{\Sigma1} \\ \vdots \\ i_{\Sigma n-1} \end{pmatrix}$$

P ayant la forme :

$$P = \begin{pmatrix} & 1 & 1 & \cdots & 1 \\ -Q \cdot \begin{pmatrix} 1 \\ \vdots \\ 1 \end{pmatrix} & & Q & \end{pmatrix}$$

où Q doit être une matrice inversible.

Si nous définissons les vecteurs $u_n$ de dimension n (lignes)$\times$1(colonne) et $u_{n-1}$ de dimension n-1 (lignes)$\times$1(colonne)

$$u_n = \begin{pmatrix} 1 \\ 1 \\ \vdots \\ 1 \end{pmatrix} \text{ et } u_{n-1} = \begin{pmatrix} 1 \\ \vdots \\ 1 \end{pmatrix}$$

Nous obtenons l'écriture de P suivante :

$$P = \left( \begin{array}{c} u_n^T \\ \hline -Q \cdot u_{n-1} \quad Q \end{array} \right)$$

L'inverse de P a la forme suivante :

$$P^{-1} = \frac{1}{n} \left( u_n \; \begin{array}{|c} -u_{n-1}^T \cdot R \\ \hline R \end{array} \right)$$

R est la matrice définie par :

$$R = n \times \left( I_{n-1} + u_{n-1} \cdot u_{n-1}^T \right)^{-1} \cdot Q^{-1}$$

Appliquons cette transformation aux tensions. Définissons alors les tensions $V_{\Sigma i}$ pour i de 1 à n-1 telles que :

$$\begin{pmatrix} \sum\limits_{i=1:n} V_{\sigma i} \\ V_{\Sigma 1} \\ \vdots \\ V_{\Sigma n-1} \end{pmatrix} = P \times \begin{pmatrix} V_{\sigma 1} \\ V_{\sigma 2} \\ \vdots \\ V_{\sigma n} \end{pmatrix} = \begin{pmatrix} \sum\limits_{i=1:n} V_{\sigma i} \\ Q \times \begin{pmatrix} V_{\sigma 2} - V_{\sigma 1} \\ \vdots \\ V_{\sigma n} - V_{\sigma 1} \end{pmatrix} \end{pmatrix} = \begin{pmatrix} n \cdot V_{\sigma M}^{REF} + \sum\limits_{i=1:n} V_{E\sigma i} \\ Q \times \begin{pmatrix} V_{E\sigma 2} - V_{E\sigma 1} \\ \vdots \\ V_{E\sigma n} - V_{E\sigma 1} \end{pmatrix} \end{pmatrix}$$

Dans ces nouvelles coordonnées, la relation (2) devient :

$$L \times \frac{d}{dt} \begin{pmatrix} i_{\sigma M} \\ i_{\Sigma 1} \\ \vdots \\ i_{\Sigma n-1} \end{pmatrix} = \begin{pmatrix} \sum\limits_{i=1:n} V_{\sigma i} \\ V_{\Sigma 1} \\ \vdots \\ V_{\Sigma n-1} \end{pmatrix} - \begin{pmatrix} n \\ 0 \\ \vdots \\ 0 \end{pmatrix} \cdot V_{\sigma M} \qquad (3)$$

Les courants $i_{\Sigma i}$ sont de la forme :

$$\begin{pmatrix} i_{\Sigma 1} \\ \vdots \\ i_{\Sigma n-1} \end{pmatrix} = (-Q \cdot u_{n-1} \quad Q) \times \begin{pmatrix} i_{\sigma 1} \\ i_{\sigma 2} \\ \vdots \\ i_{\sigma n} \end{pmatrix} = Q \times \begin{pmatrix} i_{\sigma 2} - i_{\sigma 1} \\ \vdots \\ i_{\sigma n} - i_{\sigma 1} \end{pmatrix}$$

La ligne 1 du système (3) concerne la commande du moteur. Nous pouvons considérer que chaque variateur

$$\sum_{i=1:n} V_{\sigma i} = n \cdot V_{\sigma M}{}^{REF} + \sum_{i=1:n} V_{E\sigma i}$$

apporte une composante pour

Considérons maintenant seulement les lignes de 2 à n, qui portent la problématique de contrôle du courant de circulation, il vient :

$$L \times \frac{d}{dt} \begin{pmatrix} i_{\Sigma 1} \\ \vdots \\ i_{\Sigma n-1} \end{pmatrix} = \begin{pmatrix} V_{\Sigma 1} \\ \vdots \\ V_{\Sigma n-1} \end{pmatrix} \quad (4)$$

A ce stade, les tensions de contrôle doivent être définies par les relations suivantes :

$$\begin{pmatrix} V_{\Sigma 1} \\ \vdots \\ V_{\Sigma n-1} \end{pmatrix} = f \begin{pmatrix} i_{\Sigma 1} \\ \vdots \\ i_{\Sigma n-1} \end{pmatrix}$$

La fonction f a la propriété de stabiliser le système (4). Nous citons deux exemples et poursuivons, sans perte de généralité, avec l'exemple du correcteur à action proportionnelle.
Comme premier exemple, nous pouvons définir le cas d'un correcteur à action proportionnelle :

$$\begin{pmatrix} V_{\Sigma 1} \\ \vdots \\ V_{\Sigma n-1} \end{pmatrix} = K \times \begin{pmatrix} i_{\Sigma 1} \\ \vdots \\ i_{\Sigma n-1} \end{pmatrix}$$

La matrice K a la propriété d'avoir toutes ces valeurs propres à parties réelles strictement négatives. Cette propriété assure une convergence exponentielle vers zéro des écarts de courants dans le cas du système (3).
Comme second exemple, nous pouvons définir le cas d'un correcteur à actions proportionnelles et intégrales.

$$\begin{pmatrix} V_{\Sigma 1} \\ \vdots \\ V_{\Sigma n-1} \end{pmatrix} = K_P \times \begin{pmatrix} i_{\Sigma 1} \\ \vdots \\ i_{\Sigma n-1} \end{pmatrix} + \int K_I \times \begin{pmatrix} i_{\Sigma 1} \\ \vdots \\ i_{\Sigma n-1} \end{pmatrix} \times dt$$

Définissons W l'état des intégrateurs :

$$\begin{pmatrix} W_1 \\ \vdots \\ W_{n-1} \end{pmatrix} = \int K_I \times \begin{pmatrix} i_{\Sigma 1} \\ \vdots \\ i_{\Sigma n-1} \end{pmatrix} \times dt$$

Avec le système (4), il vient :

$$L \times \frac{d}{dt}\begin{pmatrix} i_{\Sigma 1} \\ \vdots \\ i_{\Sigma n-1} \end{pmatrix} = K_P \times \begin{pmatrix} i_{\Sigma 1} \\ \vdots \\ i_{\Sigma n-1} \end{pmatrix} + \begin{pmatrix} W_1 \\ \vdots \\ W_{n-1} \end{pmatrix}$$

$$\frac{d}{dt}\begin{pmatrix} W_1 \\ \vdots \\ W_{n-1} \end{pmatrix} = K_I \times \begin{pmatrix} i_{\Sigma 1} \\ \vdots \\ i_{\Sigma n-1} \end{pmatrix}$$

Les matrices Kp et Ki ont la propriété de stabiliser le système ainsi composé, c'est-à-dire que la matrice $K_{PI}$ a la propriété d'avoir toutes ses valeurs propres à parties réelles strictement négatives, où

$$K_{PI} = \begin{pmatrix} \dfrac{K_P}{L} & \dfrac{I_{N-1}}{L} \\ \dfrac{K_I}{L} & 0_{N-1} \end{pmatrix}$$

Où $I_{N-1}$ est la matrice identité de dimension N-1, et $0_{N-1}$ est la matrice nulle de dimension N-1.

Si nous revenons aux tensions à délivrer par chaque variateur dans le cas d'une correction à action proportionnelle, nous obtenons la relation suivante :

$$\begin{pmatrix} V_{E\sigma 2} - V_{E\sigma 1} \\ \vdots \\ V_{E\sigma n} - V_{E\sigma 1} \end{pmatrix} = Q^{-1} \times K \times Q \times \begin{pmatrix} i_{\sigma 2} - i_{\sigma 1} \\ \vdots \\ i_{\sigma n} - i_{\sigma 1} \end{pmatrix}$$

En fonction de la matrice $G = Q^{-1} \times K \times Q$, les courants doivent être partagés entre les différents variateurs.

Cas 1 : choix de $Q = I_{N-1}$ (matrice identité), et K une matrice diagonale.

En choisissant $V_{E\sigma 1} = 0$, il vient G=K, et :

$$\begin{cases} V_{E\sigma 2} = K_2 \times (i_{\sigma 2} - i_{\sigma 1}) \\ \vdots \\ V_{E\sigma n} = K_n \times (i_{\sigma n} - i_{\sigma 1}) \end{cases}$$

Cela nécessite que le courant du variateur 1 soit partagé avec les autres variateurs.

$$Q = \begin{pmatrix} 1 & 0 & \cdots & 0 \\ -1 & 1 & \ddots & \vdots \\ 0 & \ddots & \ddots & 0 \\ 0 & 0 & -1 & 1 \end{pmatrix} \qquad K = \begin{pmatrix} k_2 & 0 & \cdots & 0 \\ -k_2 & k_3 & \ddots & \vdots \\ 0 & \ddots & \ddots & 0 \\ 0 & 0 & -k_{n-1} & k_n \end{pmatrix}$$

Cas 2 : choix de $Q$ , et K une matrice

$$G = \begin{pmatrix} k_2 & 0 & \cdots & 0 \\ -k_3 & k_3 & \ddots & \vdots \\ 0 & \ddots & \ddots & 0 \\ 0 & 0 & -k_n & k_n \end{pmatrix} \qquad \begin{cases} V_{E\sigma 2} = K_2 \times (i_{\sigma 2} - i_{\sigma 1}) \\ \vdots \\ V_{E\sigma n} = K_n \times (i_{\sigma n} - i_{\sigma n-1}) \end{cases}$$

En choisissant $V_{E\sigma 1} = 0$ , il vient

Cela nécessite alors que le courant du variateur i-1 soit partagé avec le variateur i (pour i allant de 2 à n).

## Revendications

1. Système de commande d'une charge électrique, ledit système comprenant:

   - Un premier convertisseur de puissance ($VV_1$) et un deuxième convertisseur de puissance ($VV_2$) connectés en parallèle, chaque convertisseur de puissance comprenant un étage onduleur ($INV_1$, $INV_2$) présentant une sortie connectée à la charge électrique,
   - Une première unité de commande ($UC_1$) affectée à la commande de l'étage onduleur ($INV_1$) du premier convertisseur de puissance et une deuxième unité de commande ($UC_2$) affectée à la commande de l'étage onduleur ($INV_2$) du deuxième convertisseur de puissance,

   **caractérisé en ce que** :

   - La première unité de commande ($UC_1$) comporte un module de commande principal ($M_{1\_1}$) agencé pour déterminer une première tension de sortie ($v_{\sigma1}$) à appliquer à la charge électrique, ladite première tension de sortie ($v_{\sigma1}$) étant déterminée en fonction du courant de sortie ($i_{\sigma1}$) du premier convertisseur de puissance,
   - La deuxième unité de commande ($UC_2$) comporte un module de commande principal ($M_{1\_2}$) agencé pour déterminer une deuxième tension de sortie ($v_{\sigma2}$) à appliquer à la charge électrique, ladite deuxième tension de sortie ($v_{\sigma2}$) étant déterminée à partir du courant de sortie ($i_{\sigma2}$) du deuxième convertisseur de puissance, et un module de commande secondaire ($M_{2\_2}$) agencé pour déterminer une tension de correction ($\Delta v_{\sigma k}$) à appliquer à ladite deuxième tension de sortie ($v_{\sigma2}$), ladite tension de correction étant déterminée à partir de la différence entre le courant de sortie ($i_{\sigma2}$) du deuxième convertisseur de puissance et le courant de sortie ($i_{\sigma1}$) du premier convertisseur de puissance.

2. Système de commande selon la revendication 1, **caractérisé en ce que** le premier convertisseur de puissance ($VV_1$) et le deuxième convertisseur de puissance ($VV_2$) comportent chacun un bus continu d'alimentation appliquant une tension continue à leur étage onduleur ($INV_1$, $INV_2$) et **en ce que** le premier convertisseur de puissance ($VV_1$) et le deuxième convertisseur de puissance ($VV_2$) sont connectés entre eux par leur bus continu d'alimentation.

3. Système de commande selon la revendication 2, **caractérisé en ce que** le bus continu d'alimentation du premier convertisseur de puissance ($VV_1$) et le bus continu d'alimentation du deuxième convertisseur de puissance ($VV_2$) comportent chacun une ligne d'alimentation à potentiel électrique positif et une ligne d'alimentation à potentiel électrique négatif.

4. Système de commande selon la revendication 2, **caractérisé en ce que** la sortie du premier convertisseur de puissance ($VV_1$) est connectée à la sortie du deuxième convertisseur de puissance ($VV_2$).

## Patentansprüche

1. System zur Steuerung einer elektrischen Last, wobei das System umfasst:

   - einen ersten Leistungswandler ($VV_1$) und einen zweiten Leistungswandler ($VV_2$), die in Parallelschaltung angeschlossen sind, wobei jeder Leistungswandler eine Wechselrichterstufe ($INV_1$, $INV_2$) umfasst, die einen Ausgang aufweist, der an die elektrische Last angeschlossen ist,
   - eine erste Steuerungseinheit ($UC_1$), die zur Steuerung der Wechselrichterstufe ($INV_1$) des ersten Leistungswandlers bestimmt ist, und eine zweite Steuerungseinheit ($UC_2$), die zur Steuerung der Wechselrichterstufe ($INV_2$) des zweiten Leistungswandlers bestimmt ist,

   **dadurch gekennzeichnet, dass**:

   - die erste Steuerungseinheit ($UC_1$) ein Hauptsteuerungsmodul ($M_{1\_1}$) beinhaltet, das dazu eingerichtet ist, eine erste Ausgangsspannung ($v_{\sigma1}$) zu bestimmen, die an die elektrische Last anzulegen ist, wobei die erste Ausgangsspannung ($v_{\sigma1}$) in Abhängigkeit vom Ausgangsstrom ($i_{\sigma1}$) des ersten Leistungswandlers bestimmt wird,
   - die zweite Steuerungseinheit ($UC_2$) ein Hauptsteuerungsmodul ($M_{1\_2}$) beinhaltet, das dazu eingerichtet ist, eine zweite Ausgangsspannung ($v_{\sigma2}$) zu bestimmen, die an die elektrische Last anzulegen ist, wobei die zweite Ausgangsspannung ($v_{\sigma2}$) anhand des Ausgangsstroms ($i_{\sigma2}$) des zweiten Leistungswandlers bestimmt wird, und ein Nebensteuerungsmodul ($M_{2\_2}$), das dazu eingerichtet ist, eine Korrekturspannung ($\Delta v_{\sigma k}$) zu bestimmen,

die an die zweite Ausgangsspannung ($v_{\sigma 2}$) anzulegen ist, wobei die Korrekturspannung anhand der Differenz zwischen dem Ausgangsstrom ($i_{\sigma 2}$) des zweiten Leistungswandlers und dem Ausgangsstrom ($i_{\sigma 1}$) des ersten Leistungswandlers bestimmt wird.

**2.** Steuerungssystem nach Anspruch 1, **dadurch gekennzeichnet, dass** der erste Leistungswandler ($VV_1$) und der zweite Leistungswandler ($VV_2$) jeweils einen Gleichstromversorgungsbus beinhalten, der eine Gleichspannung an ihre Wechselrichterstufe ($INV_1$, $INV_2$) anlegt, und dass der erste Leistungswandler ($VV_1$) und der zweite Leistungswandler ($VV_2$) über den Gleichstromversorgungsbus aneinander angeschlossen sind.

**3.** Steuerungssystem nach Anspruch 2, **dadurch gekennzeichnet, dass** der Gleichstromversorgungsbus des ersten Leistungswandlers ($VV_1$) und der Gleichstromversorgungsbus des zweiten Leistungswandlers ($VV_2$) jeweils eine Versorgungsleitung mit positivem elektrischem Potenzial und eine Versorgungsleitung mit negativem elektrischem Potential beinhalten.

**4.** Steuerungssystem nach Anspruch 2, **dadurch gekennzeichnet, dass** der Ausgang des ersten Leistungswandlers ($VV_1$) an den Ausgang des zweiten Leistungswandlers ($VV_2$) angeschlossen ist.

## Claims

**1.** A system for controlling an electrical load, said system including:

   - A first power converter ($VV_1$) and a second power converter ($VV_2$) connected in parallel, each power converter including an inverter stage ($INV_1$, $INV_2$) with an output connected to the electrical load,
   - A first control unit ($UC_1$) assigned to controlling the inverter stage ($INV_1$) of the first power converter and a second control unit ($UC_2$) assigned to controlling the inverter stage ($INV_2$) of the second power converter,

   **characterized in that**:

   - The first control unit ($UC_1$) comprises a main control module ($M_{1\_1}$) arranged for determining a first output voltage ($\boldsymbol{v_{\sigma 1}}$) to be applied to the electrical load, said first output voltage ($\boldsymbol{v_{\sigma 1}}$) being determined according to the output current ($\boldsymbol{i_{\sigma 1}}$) of the first power converter,
   - The second control unit ($UC_2$) comprises a main control module ($M_{1\_2}$) arranged for determining a second output voltage ($\boldsymbol{v_{\sigma 2}}$) to be applied to the electrical load, said second output voltage ($\boldsymbol{v_{\sigma 2}}$) being determined from the output current ($\boldsymbol{i_{\sigma 2}}$) of the second power converter, and a secondary control module ($M_{2\_2}$) arranged for determining a correction voltage ($\Delta\boldsymbol{v_{\sigma k}}$) to be applied to said second output voltage ($\boldsymbol{v_{\sigma 2}}$), said correction voltage being determined from the difference between the output current ($\boldsymbol{i_{\sigma 2}}$) of the second power converter and the output current ($\boldsymbol{i_{\sigma 1}}$) of the first power converter.

**2.** The control system as claimed in claim 1, **characterized in that** the first power converter ($VV_1$) and the second power converter ($VV_2$) each comprise a DC power supply bus applying a DC voltage to their inverter stage ($INV_1$, $INV_2$) and **in that** the first power converter ($VV_1$) and the second power converter ($VV_2$) are interconnected by their power supply bus.

**3.** The control system as claimed in claim 2, **characterized in that** the DC power supply bus of the first power converter (VV1) and the DC power supply bus of the second power converter (VV2) each comprise a power supply line with a positive electrical potential and a power supply line with a negative electrical potential.

**4.** The control system as claimed in claim 2, **characterized in that** the output of the first power converter ($VV_1$) Is connected to the output of the second power converter ($VV_2$).

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7327111 B
- US 8188694 B
- US 6917271 B
- JP 2008086127 A
- DE 4105868 A1
- US 5446645 A

**Littérature non-brevet citée dans la description**

- **Y. PANOV et al.** *Analysis and Design of N Paralleled DC-DC Converters With Master-Slave Current-Sharing Control*